# EUROPEAN PATENT SPECIFICATION

(11) **EP 3 448 826 B1**
(45) Date of publication and mention of the grant of the patent: **03.06.2020**
(21) Application number: 17715751.8
(22) Date of filing: 11.04.2017
(51) Int. Cl.: C04B 28/02, C04B 20/00, C04B 18/02, C02F 1/28, C02F 101/30, C02F 103/00

(54) **A GRANULAR COMPOSITION AND FILTER FOR PURIFICATION OF WATER**
LDH-GRANULATZUSAMMENSETZUNG UND FILTER ZUR REINIGUNG VON GRAUWASSER
LDH-COMPOSITION GRANULAIRE ET FILTRE DE PURIFICATION D'EAU GRIS

(30) Priority: 28.04.2016 EP 16167418
(43) Date of publication of application: 06.03.2019
(73) Proprietor: Unilever N.V., 3013 AL Rotterdam (NL); Unilever PLC, London, Greater London EC4Y 0DY (GB)
(72) Inventor: ABDUL KAREEM, Shajahan, Bangalore 560066 (IN); GUPTA, Santosh, Kumar, Bangalore 560066 (IN)
(74) Representative: Reijns, Tiemen Geert Pieter
(86) International application number: PCT/EP2017/058593
(87) International publication number: WO 2017/186478

(56) References cited:
- EP-A1- 1 358 128
- WO-A1-01/12570
- WO-A1-2005/014160
- WO-A1-2015/052036
- WO-A1-2015/101768
- WO-A1-2015/193087
- CN-A- 101 049 953
- US-A- 4 642 193
- US-A- 5 246 467
- NICK SCHÖWE ET AL: "Succinic Acid Removal and Recovery from Aqueous Solution Using Hydrotalcite Granules: Experiments and Modeling", INDUSTRIAL & ENGINEERING CHEMISTRY RESEARCH., vol. 54, no. 3, 28 January 2015 (2015-01-28), pages 1123-1130, XP055308470, US ISSN: 0888-5885, DOI: 10.1021/ie504306p cited in the application

## Description

### Field of the invention

The invention relates to a filter for purification of water, which is contaminated with surfactants, particularly to a filter which has longer life.

### Background of the invention

Grey water (also spelled as gray water) often contains some amount of surfactants. Usually filters made of activated carbon are used to purify such water. It is expected that such filters should have long life and that they have prolonged efficacy. However, that is not the observation in all cases. The usual filters have either very short life or their efficacy is not up to the mark. Some filters tend to "breakthrough" very early. The breakthrough time is the time when the concentration of a contaminant in the purified water exceeds the treatment requirement. More information about breakthrough time is present in the website: *https:*//*iaspub.epa.gov*/*tdb*/*pages*/*treatment*/*treatmentOverview.do?treatmentProcessld =2074826383*

Layered double hydroxides (abbreviated as LDH) represent a class of minerals, one of which is hydrotalcite.

Hydrotalcite is useful for purification of water which is contaminated with arsenic. Reference to such use is found, for example, in Ind. Eng. Chem. Res. 2005, vol. 44, pages 6804 to 6815. Some reference books, encyclopaedia and articles in inorganic chemistry and water purification indicate that modified variants of hydrotalcite containing bivalent and trivalent cations, other than the usual ones, are better than the natural form.

WO2009010376 A1 (Unilever) discloses a composition for purification of water having a first component which is layered double hydroxide (LDH)

WO15193087 A1 (Unilever) discloses a composition for purification of water which contains heavy metals including Arsenic. In this case the granules made of just LDH are used for purification of water but at the tjme of testing, the granulated LDH is used in combination with granules of activated carbon together with an organic binder to form a bound filter block which is used for purification of water.

US5846430 B1 (Crosfield Ltd) discloses use of LDH-like material for purification of water containing dyestuff.

US4642193 B (Kyowa Kagaku Kogyo, 1984) discloses purification of cooling water used in nuclear reactors by contacting the water with granules of a hydrotalcite compound or calcined form thereof. The granules are prepared by using a binder such as polyvinyl alcohol, apatite, bentonite, hectorite, montmorillonite and smectite. An amount of binder equivalent to 1 to 20 % by weight of the hydrotalcite is mixed with it and a suitable amount such as 10 to about 50% based on the weight of the hydrotalcite compound, of water is added. The mixture is kneaded for 10 to 60 minutes until the mixture becomes viscous wet mass, which is then molded into various shapes.

US 2011/0038775 A1 (Takahashi Shinji et al) discloses a porous moulded catalyst for decomposition and removal of hydrocarbons. The catalyst is made of layered double hydroxides (LDH). Exemplified compositions have approximately 48 % by weight LDH, 40 % by weight propylene glycol, 4 % by weight inorganic binder and 4 % by weight organic binder.

SCHOWE et.al. Ind. Eng. Chem. Res. 2015, Vol. 54, pages 1123-1130 discloses the use of granules of hydrotalcite for ion exchange of organic acids from aqueous solution. Eighty five parts hydrotalcite is mixed with 15 parts bentonite to obtain a homogeneous mixture. Water (61 parts) is added to the mixture to form a paste which is extruded and cut into granules of 1.3 mm diameter and 2 to 3 mm length. The granules are calcined in a muffle furnace.

MURAYAMA et.al. Resources Processing, 2013, Vol. 60, pages 131-137 discloses preparation of pellets of LDH using a granulator. The pellets contain 5 % solution of polyvinyl alcohol (PVA) as binder. LDH is added to a rotating pan granulator and sprayed with the solution at LDH: PVA (solution) weight ratio of 100 g: 30 g. The pelletized product is dried at 343 K for 24 hours. The dried pellets are sieved to collect pellets sized between 0.85 to 1.40 mm, which are used for tests. The pellets are useful for removal of anionic species, As(V), Se(IV) and Cr(VI) from wastewater.

CN101049953 (Beijing University of Chemical Technology) discloses granules made of LDH bound by polyvinyl alcohol, as catalysts.

WO15052036 A1 (Unilever) discloses a device and a process for purification of grey water, i.e., water which contains surfactants and this is achieved by continuous aeration, foam breaking and separation. The treated water may be filtered to recover fresh water which can be reused for ancillary applications.

WO15101768 A1 (Johnson Mathey PLC) discloses a method for preparing a sorbent comprising the steps of mixing together a particulate calcium silicate cement and a particulate alkali metal compound, and treating the mixture with water to hydrate the calcium silicate cement, wherein the particulate alkali metal compound comprises an oxide, hydroxide, carbonate or hydrogen carbonate and the sorbent is shaped before and/or after the treatment with water.

WO06053402 A1 (Nubian Water Systems Pty Ltd) discloses a water purification method in which activated carbon is used for purification of greywater.

Therefore, it is known that LDH can purify contaminated water, including water which contains some amount of surfactant. However, the filters made of LDH, including the bound filters disclosed in the state of the art have a shorter life. In the context of water purification using particulate media, breakthrough of the medium necessitates an intervention, such as replacement or back washing. Any intervention is a technical problem for the user of the filter and every intervention leads to some loss of performance of the filter.

### Summary of the invention

We have determined that filters made of granules of LDH in accordance with this invention have longer life and they take longer to reach their breakthrough time.

Disclosed in accordance with a first aspect is a composition in the form of granules, which comprise:
(i) 95 to 96 % by weight layered double hydroxide (LDH) of molecular formula

   [M²⁺₁₋ₓM³⁺ₓ(OH)₂]^{q+}(Xⁿ⁻)_{q/n}·yH₂O;

   where,
   M²⁺ is at least one of Ca²⁺, Mg²⁺, Mn²⁺, Fe²⁺, Co²⁺, Ni²⁺, Cu²⁺ or Zn²⁺;
   M³⁺ is at least one of Al³⁺, Fe³⁺, Cr³⁺, Ga³⁺ or V³⁺,
   X is an interlayer anion which is at least one of Cl⁻, Br⁻, NO₃⁻, CO₃²⁻, SO₄²⁻ or SeO₄²⁻; and,
   "x" is molar metal ratio from 0.1 to 0.33.
(ii) 0.3 to 2 % by weight inorganic binder which is at least one of cement, white cement, gypsum, limestone, chalk, alumina silicate, fly ash, bentonite, bitumen, calcium aluminate, clay, hydrated lime or sodium silicate; and,
(iii) 0.2 to 1.5 % by weight organic binder having molecular weight 1000 to 500,000 Daltons and whose decomposition temperature is ≤ 400 °C, which is at least one of polyvinyl alcohol, polyethylenglycol, polyvinylpyrollidone, polyacrylic acid, sugars, starch, cellulose, alginate, agar, gelatine or guar gum.

In accordance with a second aspect is disclosed a filter for purification of water comprising a composition of the first aspect.

In accordance with a third aspect is disclosed use of a composition of the first aspect for purification of water comprising 1 to 100 ppm of a surfactant.

In accordance with a third aspect is disclosed a process for preparing a composition according to the first aspect.

### Detailed description of the invention

All parts herein are by weight unless otherwise specified.

The invention provides a composition in the form of granules. The granules comprise three ingredients:
(i) a layered double hydroxide as hereinafter described;
(ii) an organic binder as hereinafter described; and,
(iii) an inorganic binder as hereinafter described

Compositions in accordance with this invention are granular, i.e. in the form of granules which could be made by any method known in the art. Details of some methods are included in the description.

### Layered Double Hydroxide (LDH)

Molecular formula of Layered Double Hydroxides is [M²⁺₁₋ₓM³⁺ₓ(OH)₂]^{q+}(Xⁿ⁻)_{q/n}·*y*H₂O; where, M²⁺ is at least one of Ca²⁺, Mg²⁺, Mn²⁺, Fe²⁺, Co²⁺, Ni²⁺, Cu²⁺ or Zn²⁺; M³⁺ is at least one of Al³⁺, Fe³⁺, Cr³⁺, Ga³⁺ or V³⁺, X is an interlayer anion which is at least one of Cl⁻, Br⁻, NO₃⁻, CO₃²⁻, SO₄²⁻ or SeO₄²⁻; and, "x" is molar metal ratio from 0.1 to 0.33.

Where the LDH contains two or three cations, it is preferred that the combinations are as follows:
Mg-AI, Cu-AI, Zn-AI, Zn-Fe, Cu-Fe, Mg-Fe, Mg-Al-Fe, Zn-Al-Fe, Cu-Al-Fe, Cu-Mg-Fe, Zn-Mg- Fe, Zn-Cu-Fe, Zn-Cu-Al, Zn-Mg-Al, Cu-Mg-Al, Zn-Cu-Al-Fe, Mg-Cu-Al-Fe, or Mg-Zn-Al-Fe.

The preferred interlayer anions are Cl⁻, Br⁻, NO₃⁻ and CO₃²⁻. It is particularly preferred that the LDH comprises at least one divalent cation selected from Mg, Zn or Cu and at least one trivalent cation which is Fe or Al.

Thus, in accordance with the invention, some of the most preferred LDH are Mg₆Al₂CO₃(OH)₁₆·4(H₂O), Zn₆Fe₂(OH)₁₆(CO₃).4H₂O or Cu₆Fe₂(OH)₁₆(CO₃).4H₂O or Zn₆AlFe(OH)₁₆(CO₃).4H₂O, or Cu₆AlFe(OH)₁₆(CO₃). 4H₂O.

It is particularly preferred that the LDH is hydrotalcite which is Mg₆Al₂CO₃(OH)₁₆·4(H₂O).

### Inorganic binder:

The granules of the composition in accordance with this invention comprise 0.3 to 2 % by weight inorganic binder, which is at least one of cement, white cement, gypsum, limestone, chalk, alumina silicate, fly ash, bentonite, bitumen, calcium aluminate, clay, hydrated lime or sodium silicate. It is preferred that the inorganic binder is at least one of cement, white cement, gypsum, limestone, chalk, alumina silicate, fly ash. A particularly preferred inorganic binder is cement. Alternatively, another particularly preferred inorganic binder is white cement.

### Organic binder:

Granules of the composition in accordance with this invention comprise 0.2 to 1.5 % by weight organic binder having molecular weight 1000 to 500,000 Daltons and whose decomposition temperature is ≤ 400 °C, which is at least one of polyvinyl alcohol, polyethylene glycol, polyvinyl pyrollidone, polyacrylic acid, starch, cellulose, alginate, agar, gelatine or guar gum. Polyvinyl alcohol is the preferred binder.

It is further preferred that polyvinyl alcohol, is partially hydrolyzed and the hydrolysis is 70 to 80 %. In the case of polyvinyl alcohol it is preferred that the molecular weight is 1000 to 500,000 Daltons, more preferably 5000 to 50000 Daltons and most preferably 8000 to 25000 Daltons.

It is particularly preferred that in the composition according to the invention which is in the form of granules, the LDH is hydrotalcite, the inorganic binder is cement and the organic binder is polyvinyl alcohol.

### Granulation

Compositions in accordance with this invention are granular, i.e. in the form of granules. The granules are made by granulation.

Any appropriate granulating method could be used to granulate the ingredients. For example, granulation may be carried out by dry compaction or wet granulation processes such as extrusion, tumbling, compression, fluidization, fluidised bed granulation, melt granulation, spray granulation, or pelletisation. The shape and size of the granules may be properly selected. The granules may be in any desired shape such as a spherical, solid cylindrical, hollow cylindrical or pyramid shaped, and their sizes may range as described hereinafter. Use may be made of any suitable compaction machine such as tablet press, roll compactor, chilsonator, spheronizer or their combinations, while wet granulation techniques include a non-exhaustive list of wet shearing machines such as rapid mixer granulator, plough shear mixer, planetary mixer or their combinations.

The invention provides a granular composition which can be used as such for water purification without necessarily subjecting the granules to further processing of preparing bound blocks which invariably contain an additional organic binder.

### Calcination:

The granules are useful in calcined as well as uncalcined form. However, It is preferred that the granules are in calcined form. This form is obtainable by heating the corresponding uncalcined granules to ≤ 400 °C.

Preferably, the pore size of calcined granules is 5 nm to 200 nm, more preferably 20 to 150, most preferably in the range of 25 to 100 nm. Preferably, bulk density of calcined granules is 0.2 g/ml to 0.9 g/ml, more preferably 0.25 to 0.8 g/ml, most preferably 0.4 to 0.6 g/ml. Preferably the percentage porosity of calcined granules is 90% to 60%, more preferably 85 % to 75 %, most preferably, 80 % to 70 %. Preferably, the surface area of calcined granules is 10 m²/g to 250 m²/g, more preferably 50 to 250 and most preferably 100 to 250 m²/g.

It is further preferred that particle size of the granules is 500 to 1000 µm.

### Filter for water purification and use of the composition:

In accordance with a second aspect is disclosed a filter for purification of water comprising a composition of the first aspect. The filter is useful for purification of water contaminated with surfactants. The granules of the composition could be bound (with a binder like polyethylene) or they could be unbound. It is preferred that the granules are unbound.

It is preferred that the filter is a packed-bed filter, more preferably of path length 5 to 7 cm.

In accordance with another aspect is disclosed the use of a composition as claimed in the first aspect for purification of water comprising 1 to 100 ppm surfactant.

It is preferred that the breakthrough time of ten grams of the composition in accordance with the invention is at least ten minutes, at flow-rate of 30 to 80 ml/minute. This flow-rate is the flow-rate of the water, to be purified, through the filter.

It is further preferred that before being used in the packed-bed filter, the granules are soaked for 24 to 48 hours in water whose TDS is not more than 50 ppm.

The invention will be explained in details with the help of non-limiting examples.

### EXAMPLES

### Example-1: Preparation of granules of Mg-Al hydrotalcite

Mg-AI LDH (Hydrotalcite) powder was obtained from Taurus Chemicals, Hyderabad, India. Average particle size was less than 50 µm and the bulk density was 0.26 g/ml.

For some comparative experiments, Granular Activated Carbon (GAC) was procured from Active Carbon, Hyderabad, India. Its particle size was 500 to 1000 µm. Commercial white cement was used as the inorganic binder (as 2 % aqueous suspension in water having pH 6.5 and TDS 80 ppm). Commercial polyvinyl alcohol (80 % hydrolysis) of molecular weight 8000 to 25000 Daltons was the organic binder.

56 g LDH was mixed with 84 ml of a (2 %) aqueous white cement suspension in a container using a spatula to form a wet mix. Thereafter, an additional 14 g LDH was added to the wet mixture. it was mixed with the spatula to get almost free flowing aggregates. The aggregates were added to a spheroniser along with an additional 28 g LDH to reduce further aggregation. The spheroniser was set to rotate at 200 to 500 RPM for two to five minutes, after which the spherical granules were dried at 80 °C for five hours in an oven. They were calcined at 350 to 400 °C for 3 to 4 hours. In some cases, aqueous poly vinyl alcohol (PVA) solution was added. After drying, the granules were sieved to separate the particles of 500 to 1000 µm, which were used for the packed-bed experiments as described hereinafter.

Some more compositions were made for conducting experiments thereon, with appropriate modifications to the process described earlier.

Compositions of all the granules is shown in Table 1.

**Table 1**

| Weight of ingredients | Composition | | | |
|---|---|---|---|---|
| | LDH 1 | LDH 2 | LDH 3 | LDH 4 |
| Total LDH/g | 98.3 | 98.5 | 98.1 | 97.5 |
| White cement/g | 1.7 | 1.2 | 1.2 | 1.1 |
| PVA/g | 0.0 | 0.3 | 0.7 | 1.4 |
| Total weight of granules | 100 | 100 | 100 | 100 |

### Purification of water

A filter containing 10 g of the composition (granules) of Example-1 was prepared and used for the experiments. A 60 cm-long acrylic column of internal diameter 2 cm served as a body of the filter. Particle size of the granules was 500 to 1000 µm. Before use, the granules were soaked in water for 24 hours.

An aqueous solution of surfactant (sodium dodecyl benzene sulphonate) of known concentration was passed through the column at controlled flow-rate of 50 ml/minute. The flow was maintained by using a peristaltic pump. The water flowing out of the column (treated) was collected from time to time and concentration of the surfactant was measured by Hyamine titration method. The objective was to determine the point in time at which noticeable amount of the surfactant is found in the output water. In other words, the objective was to determine the breakthrough time of each composition; higher the value, better and more efficacious is the composition.

The same experiment was carried out on each composition of Table 1, and the observations are presented in Table 2.

**Table 2**

| Details of granules | Concentration of surfactant in input water/ppm | Calcined/Uncalcined | Breakthrough time/minutes |
|---|---|---|---|
| LDH 1 | 14 | Uncalcined | 6 |
| LDH 1 | 14 | Calcined, 350 °C/3 hours | 16 |
| GAC, binder-free | 14 | Not applicable | 27 |
| LDH 2 | 78 | Calcined, 350 °C/3 hours | 10 |
| LDH 3 | 14 | Calcined, 350 °C/3 hours | 500 |
| LDH 3 | 75 | Calcined, 250 °C/3 hours | 10 |
| LDH 3 | 75 | Calcined, 350 °C/3 hours | 105 |
| LDH 3 | 78 | Calcined, 350 °C/3 hours | 105 |
| LDH 4 | 78 | Calcined, 350 °C/3 hours | 40 |

| | | | |
|---|---|---|---|
| Note: Granules referred to as LDH 2, 3 and 4 are in accordance with the invention | | | |

Data in Table 2 indicates that the granules containing white cement and PVA have significantly longer breakthrough time as compared to granules devoid of PVA. The data also shows clearly that calcination enhances the breakthrough time. The breakthrough time is longer for granules calcined at 350 °C, which in turn is higher than those calcined at 250 °C. The granules according to this invention have much longer breakthrough time (almost an order of magnitude) than commercial GAC. Granules labelled as LDH 1 which are devoid of the organic binder either have very short breakthrough time or when the breakthrough time is 16 minutes, the concentration of surfactant in water was 14 ppm, the LDH 1 granules were not exposed to a high surfactant load but the granules still did not exhibit a longer useful life.

Some important physical properties of the compositions of the present invention and the comparative compositions is presented in Table 3.

**Table 3**

| Composition | Average BET surface area, m²/g | Average pore size/nm | Bulk density in g/ml | Porosity (%) |
|---|---|---|---|---|
| Uncalcined LDH 1, not according to the invention | 50 | 65 | 0.76 | 61 |
| Calcined LDH 1 | 134 | 45 | 0.70 | 70 |
| LDH 2, Calcined/350 °C | 132 | 66 | 0.56 | 75 |
| LDH 3, Calcined/350 °C | 122 | 64 | 0.55 | 76 |
| LDH 4, Calcined/350 °C | 68 | 66 | 0.61 | 75 |

Table 3 indicates that average surface area of calcined granules is greater than uncalcined ones. The average pore size is not affected by inclusion of PVA even up to 1.4 wt%, whereas there is significant difference was observed between average BET surface area of granules having 0.3% and 1.7%.

### Example-2: Preparation of granules of Zn-Al hydrotalcite

Zn-AI LDH powder was obtained from Priti Industries, Gujarat, India. Average particle size was less than 63 µm and the average bulk density was 0.28 g/ml.

Commercial white cement was used as the inorganic binder (as 2 % aqueous suspension in water having pH 6.5 and TDS 80 ppm). Commercial polyvinyl alcohol (80 % hydrolysis) of molecular weight 8000 to 9000 Daltons was the organic binder. Sixty grams of the Zn LDH was mixed with 40 ml of a (2 %) aqueous suspension of white cement in a container using a spatula to form a wet mix. Thereafter, an additional 15 g Zn LDH was added to the wet mixture. Then 20 ml of (2.5%) PVA was added and mixed. Thereafter 9 g of Zn LDH powder was added and it was mixed with the spatula to get free flowing aggregates. The aggregates were added to a spheroniser along with an additional 16 g Zn LDH to reduce further aggregation. The spheroniser was set to rotate at around 300 RPM for around 3 minutes, after which the spherical granules were dried at 80 °C for five hours in an oven. They were calcined at 350 °C for 3 hours. After drying, the granules were sieved to separate the particles of 500 to 1000 µm, which were used for the packed-bed experiments as described hereinafter.

Composition of the granules is shown in Table 4.

**Table 4**

| Ingredient | Weight of ingredient/g |
|---|---|
| Total LDH | 98.7 |
| White cement | 0.8 |
| PVA | 0.5 |
| Total weight of the granular composition | 100 |

### Purification of water

The granular composition of Table 4 was used in an experiment for purification of water. The procedure is described below Table 1. The observations are summarized in Table 5.

**Table 5**

| Concentration of surfactant in input water/ppm | Calcined/Uncalcined | Breakthrough time/ minutes |
|---|---|---|
| 72 | Calcined, 350 °C/3 hours | 4 |

The granular composition of Example 2 has breakthrough time of 4 minutes but the initial surfactant concentration was very high.

## Claims

1. A composition in the form of granules which comprise:
(i) 95 to 98 % by weight layered double hydroxide (LDH) of molecular formula [M²⁺₁₋ₓM³⁺ₓ(OH)₂]^{q+}(Xⁿ⁻)_{q/n}·*y*H₂O;
where,
M²⁺ is at least one of Ca²⁺, Mg²⁺, Mn²⁺, Fe²⁺, Co²⁺, Ni²⁺, Cu²⁺ or Zn²⁺;
M³⁺ is at least one of Al³⁺, Fe³⁺, Cr³⁺, Ga³⁺ or V³⁺,
X is an interlayer anion which is at least one of Cl⁻, Br⁻, NO₃⁻, CO₃²⁻, SO₄²⁻ or SeO₄²⁻; and "x" is the molar metal ratio from 0.1 to 0.33.
(ii) 0.3 to 2 % by weight inorganic binder which is at least one of gypsum, limestone, chalk, alumina silicate, fly ash, bentonite, bitumen, calcium aluminate, clay, hydrated lime or sodium silicate, cement, preferably white cement; and,
(iii) 0.2 to 1.5 % by weight organic binder having molecular weight 1000 to 500,000 Daltons and decomposition temperature ≤ 400 °C , which is at least one of poly vinyl alcohol, polyethylene glycol, polyvinyl pyrollidone, polyacrylic acid, starch, cellulose, alginates, agar, gelatine or guar gum.

2. A composition as claimed in claim 1 wherein said granules are in calcined form, obtainable by heating the corresponding uncalcined granules to ≤ 400 °C.

3. A composition as claimed in claim 1 or 2 wherein said LDH is hydrotalcite, Mg₆Al₂CO₃(OH)₁₆ 4 H₂O.

4. A composition as claimed in any preceding claim 1 to 3 wherein said inorganic binder is at least one of gypsum, limestone, chalk, alumina silicate, fly ash or cement, preferably white cement.

5. A composition as claimed in any preceding claim 1 to 4 wherein said organic binder is poly vinyl alcohol.

6. A composition as claimed in claim 5 wherein molecular weight of said polyvinyl alcohol is 8000 Daltons to 10000 Daltons.

7. A composition as claimed in any preceding claim 2 to 6 wherein pore size of calcined granules is 5 nm to 200 nm.

8. A composition as claimed in any preceding claim 2 to 7 wherein bulk density of calcined granules is 0.2 g/ml to 0.9 g/ml.

9. A composition as claimed in any preceding claim 2 to 8 wherein percentage porosity of calcined granules is 90 % to 60 %.

10. A filter for purification of water comprising a composition as claimed in any preceding claim 1 to 9.

11. Use of a composition as claimed in any preceding claim 1 to 9 for purification of water comprising 1 to 100 ppm of a surfactant.

12. Use of a composition as claimed in claim 11 wherein said surfactant is anionic.

13. A process for preparing a composition in the form of granules as claimed in claim 1, comprising the steps of:
(i) mixing 95 to 98 parts by weight layered double hydroxide (LDH), in calcined or uncalcined form, whose molecular formula is
[M²⁺₁₋ₓM³⁺ₓ(OH)₂]^{q+}(Xⁿ⁻)q_{/n}·*y*H₂O;
where,
M²⁺ is at least one of Ca²⁺, Mg²⁺, Mn²⁺, Fe²⁺, Co²⁺, Ni²⁺, Cu²⁺ or Zn²⁺;
M³⁺ is at least one of Al³⁺, Fe³⁺, Cr³⁺, Ga³⁺ or V³⁺; X is an interlayer anion which is at least one of Cl⁻, Br⁻, NO₃⁻, CO₃²⁻, SO₄²⁻ or SeO₄²⁻; and, x is is the molar metal ratio from 0.1 to 0.33, and where calcined form is defined as the form obtained by heating uncalcined LDH to ≤ 400 °C, with an aqueous suspension of 0.3 to 2.0 parts by weight inorganic binder which is at least one of gypsum, limestone, chalk, alumina silicate, fly ash, bentonite, bitumen, calcium aluminate, clay, hydrated lime or sodium silicate, cement, preferably white cement; and,
(i) adding 0.2 to 1.5 parts by weight organic binder having molecular weight 1000 to 500,000 Daltons and decomposition temperature of ≤ 400 °C , which is at least one of polyethylenglycol, polyvinylpyrollidone, polyacrylic acid, sugars, starch, cellulose, alginate, agar, gelatine or guar gum to the mix of step (i) and further mixing all the ingredients;
(ii) passing said mix of step (ii) through a granulator to obtain said composition in the form of granules.

## Patentansprüche

1. Zusammensetzung in Form von Granulat, welches umfasst:
(i) 95 bis 98 Gewichts-% geschichtetes Doppelhydroxid (LDH) der Molekülformel [M²⁺₁₋ₓM³⁺ₓ(OH)₂]^{q+}(Xⁿ⁻)_{q/n}·yH₂O; wobei
M²⁺ mindestens eines von Ca²⁺, Mg²⁺, Mn²⁺, Fe²⁺, Co²⁺, Ni²⁺, Cu²⁺ oder Zn²⁺ ist;
M³⁺ mindestens eines von Al³⁺, Fe³⁺, Cr³⁺, Ga³⁺ oder V³⁺ ist,
X ein Zwischenschichtanion ist, das mindestens eines von Cl⁻, Br⁻, NO₃⁻, CO₃²⁻, SO₄²⁻ oder SeO₄²⁻ ist; und "x" das molare Metallverhältnis von 0,1 bis 0,33 ist;
(ii) 0,3 bis 2 Gewichts-% anorganisches Bindemittel, das mindestens eines von Gips, Kalkstein, Kreide, Aluminiumoxidsilicat, Flugasche, Bentonit, Bitumen, Calciumaluminat, Ton, Kalkhydrat oder Natriumsilicat, Zement, bevorzugt Weißzement, ist; und
(iii) 0,2 bis 1,5 Gewichts-% organisches Bindemittel mit einem Molekulargewicht von 1000 bis 500.000 Dalton und einer Zersetzungstemperatur ≤ 400 °C, das mindestens eines von Polyvinylalkohol, Polyethylenglycol, Polyvinylpyrrolidon, Polyacrylsäure, Stärke, Cellulose, Alginaten, Agar, Gelatine oder Guargummi ist.

2. Zusammensetzung wie in Anspruch 1 beansprucht, wobei das Granulat in calcinierter Form vorliegt, erhältlich durch Erhitzen des entsprechenden nicht calcinierten Granulats auf ≤ 400 °C.

3. Zusammensetzung wie in Anspruch 1 oder 2 beansprucht, wobei das LDH Hydrotalcit ist, Mg₆Al₂CO₃(OH)₁₆ 4 H₂O.

4. Zusammensetzung wie in irgendeinem der vorhergehenden Ansprüche 1 bis 3 beansprucht, wobei das anorganische Bindemittel mindestens eines von Gips, Kalkstein, Kreide, Aluminiumoxidsilicat, Flugasche oder Zement, bevorzugt Weißzement, ist.

5. Zusammensetzung wie in irgendeinem der vorhergehenden Ansprüche 1 bis 4 beansprucht, wobei das organische Bindemittel Polyvinylalkohol ist.

6. Zusammensetzung wie in Anspruch 5 beansprucht, wobei das Molekulargewicht des Polyvinylalkohols 8000 Dalton bis 10000 Dalton beträgt.

7. Zusammensetzung wie in irgendeinem der vorhergehenden Ansprüche 2 bis 6 beansprucht, wobei die Porengröße des calcinierten Granulats 5 nm bis 200 nm beträgt.

8. Zusammensetzung wie in irgendeinem der vorhergehenden Ansprüche 2 bis 7 beansprucht, wobei die Schüttdichte des calcinierten Granulats 0,2 g/ml bis 0,9 g/ml beträgt.

9. Zusammensetzung wie in irgendeinem der vorhergehenden Ansprüche 2 bis 8 beansprucht, wobei die Porosität in Prozent des calcinierten Granulats 90% bis 60% beträgt.

10. Filter zur Reinigung von Wasser, umfassend eine Zusammensetzung wie in irgendeinem der vorhergehenden Ansprüche 1 bis 9 beansprucht.

11. Verwendung einer Zusammensetzung wie in irgendeinem der vorhergehenden Ansprüche 1 bis 9 beansprucht zur Reinigung von Wasser, das 1 bis 100 ppm eines Tensids umfasst.

12. Verwendung einer Zusammensetzung wie in Anspruch 11 beansprucht, wobei das Tensid anionisch ist.

13. Verfahren zur Herstellung einer Zusammensetzung in Form von Granulat wie in Anspruch 1 beansprucht, umfassend die Schritte:
(i) Mischen von 95 bis 98 Gewichtsteilen geschichtetes Doppelhydroxid (LDH) in calcinierter oder nicht calcinierter Form, dessen Molekülformel [M²⁺₁₋ₓM³⁺ₓ(OH)₂]^{q+}(Xⁿ⁻)q_{/n}·yH₂O ist;
wobei
M²⁺ mindestens eines von Ca²⁺, Mg²⁺, Mn²⁺, Fe²⁺, Co²⁺, Ni²⁺, Cu²⁺ oder Zn²⁺ ist;
M³⁺ mindestens eines von Al³⁺, Fe³⁺, Cr³⁺, Ga³⁺ oder V³⁺ ist, X ein Zwischenschichtanion ist, das mindestens eines von Cl⁻, Br⁻, NO₃⁻, CO₃²⁻, SO₄²⁻ oder SeO₄²⁻ ist; und x das molare Metallverhältnis von 0,1 bis 0,33 ist, und wobei die calcinierte Form als die Form definiert ist, die durch Erhitzen von nicht calciniertem LDH auf ≤ 400 °C erhalten wird, mit einer wässrigen Suspension von 0,3 bis 2,0 Gewichtsteilen anorganischem Bindemittel, das mindestens eines von Gips, Kalkstein, Kreide, Aluminiumoxidsilicat, Flugasche, Bentonit, Bitumen, Calciumaluminat, Ton, Kalkhydrat oder Natriumsilicat, Zement, bevorzugt Weißzement, ist; und
(ii) Zugeben von 0,2 bis 1,5 Gewichtsteilen organisches Bindemittel mit einem Molekulargewicht von 1000 bis 500.000 Dalton und einer Zersetzungstemperatur ≤ 400 °C, das mindestens eines von Polyethylenglycol, Polyvinylpyrrolidon, Polyacrylsäure, Zuckern, Stärke, Cellulose, Alginat, Agar, Gelatine oder Guargummi ist, zu der Mischung von Schritt (i) und weiteres Mischen aller Bestandteile;
(iii) Durchleiten der Mischung von Schritt (ii) durch einen Granulator, um die Zusammensetzung in Form von Granulat zu erhalten.

## Revendications

1. Composition dans la forme de granulés qui comprend :
(i) 95 à 98 % en masse d'hydroxyde double en couches (LDH) de formule moléculaire [M²⁺₁₋ₓM³⁺ₓ(OH)₂]^{q+}(Xⁿ⁻)_{q/n}·*y*H₂O ;
où,
M²⁺ est au moins un de Ca²⁺, Mg²⁺, Mn²⁺, Fe²⁺, Co²⁺, Ni²⁺, Cu²⁺ ou Zn²⁺ ;
M³⁺ est au moins un de Al³⁺, Fe³⁺, Cr³⁺, Ga³⁺ ou V³⁺ ;
X est un anion de couche intermédiaire qui est au moins un de Cl⁻, Br⁻, NO₃⁻, CO₃²⁻, SO₄²⁻ ou SeO₄²⁻ ; et "x" est le ratio de métal molaire de 0,1 à 0,33.
(ii) 0,3 à 2 % en masse de liant inorganique qui est au moins un parmi le gypse, la chaux, la craie, le silicate d'alumine, la cendre volante, la bentonite, le bitume, l'aluminate de calcium, l'argile, la chaux hydratée ou le silicate de sodium, le ciment, de préférence le ciment blanc ; et,
(iii) 0,2 à 1,5 % en masse de liant organique ayant une masse moléculaire de 1 000 à 500 000 Daltons et une température de décomposition de ≤ 400°C, qui est au moins un parmi le poly(alcool vinylique), le polyéthylèneglycol, la polyvinylpyrrolidone, le poly(acide acrylique), l'amidon, la cellulose, les alginates, l'agar, la gélatine ou la gomme guar.

2. Composition selon la revendication 1, dans laquelle lesdits granulés sont dans une forme calcinée, pouvant être obtenus par chauffage des granulés non calcinées correspondants à ≤ 400°C.

3. Composition selon la revendication 1 ou 2, dans laquelle ledit LDH est l'hydrotalcite, Mg₆Al₂CO₃(OH)₁₆4H₂O.

4. Composition selon l'une quelconque des revendications 1 à 3 précédentes, dans laquelle ledit liant inorganique est au moins un parmi le gypse, la chaux, la craie, le silicate d'alumine, la cendre volante ou le ciment, de préférence le ciment blanc.

5. Composition selon l'une quelconque des revendications 1 à 4 précédentes, dans laquelle ledit liant organique est le poly(alcool vinylique).

6. Composition selon la revendication 5, dans laquelle la masse moléculaire dudit poly(alcool vinylique) est de 8 000 Daltons à 10 000 Daltons.

7. Composition selon l'une quelconque des revendications 2 à 6 précédentes, dans laquelle la taille de pore de granulés calcinés est de 5 nm à 200 nm.

8. Composition selon l'une quelconque des revendications 2 à 7 précédentes, dans laquelle la masse volumique apparente de granulés calcinés est de 0,2 g/ml à 0,9 g/ml.

9. Composition selon l'une quelconque des revendications 2 à 8 précédentes, dans laquelle la porosité en pourcentage de granulés calcinés est de 90 % à 60 %.

10. Filtre pour purification d'eau comprenant une composition selon l'une quelconque des revendications 1 à 9 précédentes.

11. Utilisation d'une composition selon l'une quelconque des revendications 1 à 9 précédentes pour purification d'eau comprenant de 1 à 100 ppm d'un tensioactif.

12. Utilisation d'une composition selon la revendication 11, dans laquelle ledit tensioactif est anionique.

13. Procédé de préparation d'une composition dans la forme de granulés selon la revendication 1, comprenant les étapes de :
(i) mélange de 95 à 98 parties en masse d'hydroxyde double en couches (LDH), dans une forme calcinée ou non calcinée, dont la formule moléculaire est [M²⁺₁₋ₓM³⁺ₓ(OH)₂]^{q+}(Xⁿ⁻)_{q/n}·*y*H₂O ;
où,
M²⁺ est au moins un de Ca²⁺, Mg²⁺, Mn²⁺, Fe²⁺, Co²⁺, Ni²⁺, Cu²⁺ ou Zn²⁺ ;
M³⁺ est au moins un de Al³⁺, Fe³⁺, Cr³⁺, Ga³⁺ ou V³⁺ ;
X est un anion de couche intermédiaire qui est au moins un de Cl⁻, Br⁻, NO₃⁻, CO₃²⁻, SO₄²⁻ ou SeO₄²⁻ ; et "x" est le ratio de métal molaire de 0,1 à 0,33, et où la forme calcinée est définie comme la forme obtenue en chauffant LDH non calciné à ≤ 400°C,
avec une suspension aqueuse de 0,3 à 2,0 parties en masse de liant inorganique qui est au moins un choisi parmi le gypse, la chaux, la craie, le silicate d'alumine, la cendre volante, la bentonite, le bitume, l'aluminate de calcium, l'argile, la chaux hydratée ou le silicate de sodium, le ciment, de préférence le ciment blanc ; et
(i) l'addition de 0,2 à 1,5 parties en masse de liant organique ayant une masse moléculaire de 1 000 à 500 000 Daltons et une température de décomposition de ≤ 400°C, qui est au moins un parmi le polyéthylèneglycol, la polyvinylpyrrolidone, le poly(acide acrylique), des sucres, l'amidon, la cellulose, l'alginate, l'agar, la gélatine ou la gomme guar au mélange de l'étape (i) et de plus le mélange de tous les ingrédients ;
(ii) le passage dudit mélange de l'étape (ii) à travers un granulateur pour obtenir ladite composition dans la forme de granulés.
